# EUROPEAN PATENT SPECIFICATION

(11) **EP 4 289 587 B1**
(45) Date of publication and mention of the grant of the patent: **13.11.2024**
(21) Application number: 23176501.7
(22) Date of filing: 31.05.2023
(51) Int. Cl.: B29C 33/38, B29C 45/14, B29C 45/26, B29C 45/33, B29C 45/73, B65B 61/18, B29C 45/00, B29C 45/44, B65D 5/74, B65D 47/14

(54) **MOLDING TOOL, MOLDING APPARATUS HAVING A MOLDING TOOL AND PACKAGING MACHINE HAVING A MOLDING APPARATUS**
FORMWERKZEUG, FORMVORRICHTUNG MIT EINEM FORMWERKZEUG UND VERPACKUNGSMASCHINE MIT EINER FORMVORRICHTUNG
OUTIL DE MOULAGE, APPAREIL DE MOULAGE COMPRENANT UN OUTIL DE MOULAGE ET MACHINE D'EMBALLAGE COMPRENANT UN APPAREIL DE MOULAGE

(30) Priority: 06.06.2022 EP 22177378
(43) Date of publication of application: 13.12.2023
(73) Proprietor: Tetra Laval Holdings & Finance S.A., 1009 Pully (CH)
(72) Inventor: MORCIANO, Alessio, 41123 Modena (IT); LEONARDI, Luca, 41123 Modena (IT)
(74) Representative: Tetra Pak - Patent Attorneys SE

(56) References cited:
- EP-A1- 3 581 355
- EP-A1- 3 919 404
- DE-A1- 102007 054 723
- ANONYMOUS: "Injection Mold Design Guidelines - Maximizing Performance Using Copper Alloys", MODERN PLASTICS, 1 June 1999 (1999-06-01), pages 45 - 48, XP055980093, Retrieved from the Internet <URL:https://www.copper.org/applications/industrial/PDF_files/9906.pdf> [retrieved on 20221110]
- PERRYMAN J M: "Using aluminum and copper alloys for production injection molds", SOCIETY OF PLASTICS ENGINEERS. ANNUAL TECHNICAL CONFERENCE (ANTEC). PROCEEDINGS, SOCIETY OF PLASTICS ENGINEERS, US, vol. 1, 1 May 1997 (1997-05-01), pages 482 - 484, XP002296746, ISSN: 1539-2252
- REZAYAT M ET AL: "EFFECTS OF INSERTS ON THE INJECTION MOLDING PROCESS", POLYMER ENGINEERING AND SCIENCE, BROOKFIELD CENTER, US, vol. 34, no. 3, 15 February 1994 (1994-02-15), pages 247 - 251, XP000499692, ISSN: 0032-3888

## Description

### TECHNICAL FIELD

The present invention relates to a molding tool for molding opening devices, in particular for molding opening devices onto a packaging material, even more particular for molding opening devices onto a multilayer packaging material.

Advantageously, the present invention also relates to a molding apparatus for molding opening devices, in particular for molding opening devices onto a packaging material, even more particular for molding opening devices onto a multilayer packaging material.

Advantageously, the present invention also relates to a packaging machine for forming sealed packages of a pourable product, in particular a pourable food product, the packaging machine having a molding apparatus for molding opening devices onto a packaging material, in particular onto a multilayer packaging material.

### BACKGROUND ART

As is known, many liquid or pourable food products, such as fruit juice, UHT (ultra-high-temperature treated) milk, wine, tomato sauce, etc., are sold in packages made of sterilized packaging material.

A typical example is the parallelepiped-shaped package for liquid or pourable food products known as Tetra Brik Aseptic (registered trademark), which is made by sealing and folding a laminated packaging material. The packaging material has a multilayer structure comprising a fibrous base layer, e.g. of paper or cardboard, covered on both sides with layers of heat-seal plastic material, e.g. polyethylene. In the case of aseptic packages for long-storage products, such as UHT milk, the packaging material also comprises a layer of oxygen-barrier material (an oxygen-barrier layer), e.g. an aluminum foil, which is superimposed on a layer of heat-seal plastic material, and is in turn covered with another layer of heat-seal plastic material forming the inner face of the package eventually contacting the food product.

Packages of this sort are normally produced on fully automatic packaging apparatuses, which advance and sterilize a web of packaging material, which is then formed into a tube and filled with the pourable product before its formation into individual sealed packages.

It is known that some types of packages also comprise respective opening devices, which allow to be manipulated for accessing the pourable product.

Such opening devices are typically obtained during a molding process from a molten polymer.

Some of these opening devices are post-applied, meaning that they are applied onto a filled main body of the package after formation of the main body from the packaging material.

Other kinds of opening devices are molded directly onto the packaging material, and in particular prior to the manipulation of the packaging material for obtaining the packages.

In order to mold the opening devices onto the packaging material, the automatic packaging apparatuses may comprise a molding system for molding the opening devices onto the packaging material, which in particular may be provided in the form of a web.

A typical molding system comprises a plurality of molding apparatuses each having at least one molding tool couplable to the packaging material. Each molding tool comprises a plurality of molding tool portions. The molding tool portions can be moved towards and withdrawn from one another. When being moved towards one another, the molding tool portions define a respective mold cavity of the molding tool, which in turn defines the shape of the opening device. Withdrawing the molding tool portions from one another allows demolding of the molded opening device and alignment of a new portion of the packaging material with the molding tool portions. Each molding apparatus also comprises one respective injection device coupled to the respective molding tool for injecting a molten polymer into the respective mold cavity.

EP 3 919 404 A1 discloses an opening device with a collar having a pouring outlet, a lid covering the pouring outlet and a gripping element connected to and protruding from the lid. EP 3 581 355 A1 discloses an opening device with a pouring spout, a lid and a pull-tab and a molding tool with a plurality of molding tool portions that define a mold cavity when in the closed position. DE 10 2007 054723 A1 discloses cavity inserts with high thermal conductivity that are seated in a mould.

Mold inserts are also discussed in "Injection Mold Design Guidelines - Maximizing Performance Using Copper Alloys", Modern plastics, 1 June 1999, pages 45-48, [retrieved on 2022-11-10], retrieved from the , non-patent literature reference number XP055980093 and in "Effects of Inserts on the Injection Molding Process", Rezayat M. et al.,Polymer Engineering and Science, vol. 34, no. 3, 15 February 1994 (1994-02-15), pages 247-251, ISSN: 0032-3888, non-patent literature reference number XP000499692. T Even though the known molding apparatuses and molding tools work satisfyingly well, a desire is felt in the sector to further improve the known molding apparatuses and/or the known molding tools.

In particular, a desire is felt in the sector, to allow for a facilitated demolding of the molded opening device.

### DISCLOSURE OF INVENTION

It is therefore an object of the present invention to provide an improved molding tool.

It is therefore another object of the present invention to provide an improved molding apparatus.

Moreover, it is an object of the present invention to provide a packaging machine having a molding apparatus.

According to the present invention, there is provided a molding tool as claimed in claim 1.

Preferred non-limiting embodiments of the molding tool are claimed in the respective dependent claims.

According to the present invention, there is also provided a molding apparatus according to claim 11 or 12.

According to the present invention, there is also provided a packaging machine according to claim 13.

### BRIEF DESCRIPTION OF THE DRAWINGS

A non-limiting embodiment of the present invention will be described by way of example with reference to the accompanying drawings, in which:
Figure 1 is a schematic view of a packaging machine, with parts removed for clarity;
Figure 2 is a schematic view of an opening device molded onto a packaging material, with parts removed for clarity;
Figure 3 is a sectioned view of a molding tool according to the present invention, with parts removed for clarity;
Figure 4 is an exploded view of the molding tool of Figure 3, with parts removed for clarity;
Figure 5 is a perspective view of portions of the molding tool of Figure 3, with parts removed for clarity; and
Figure 6 is an enlarged perspective view of a detail of one of the portions of Figure 5, with parts removed for clarity.

### BEST MODES FOR CARRYING OUT THE INVENTION

Number 1 indicates as a whole a packaging machine for producing (sealed) packages 2 of a pourable product, in particular a pourable food product such as pasteurized milk, fruit juice, wine, tomato sauce, etc., each package 2 having at least one respective opening device 3.

In more detail, each package 2 may comprise a respective main body 4 containing the pourable product and the respective opening device 3 may be connected to the respective main body 4.

In particular, each main body 4 may be formed from a packaging material, preferentially provided in the form of a web 5 of packaging material.

According to the specific embodiment disclosed, each opening device 3 may be molded onto the respective main body 2. In more detail, each opening devices 3 may be molded onto the packaging material, in particular respective portions of the packaging material that after formation of packages 2 from the packaging material defines the respective main bodies 4.

Alternatively, opening devices 3 may be molded independently from the packaging material and may be attached, e.g. by means of welding, ultrasound welding, adhesive bonding or the like, onto the respective main body 4. According to such a solution, each main body 4 is obtained from the packaging material without the applied opening device 3 and only afterwards the opening device 3 is applied.

According to some preferred non-limiting embodiments, packaging machine 1 may be configured to produce packages 2 from the packaging material, in particular the packaging material being provided in the form of web 5.

Preferentially, each opening device 3 may be configured to allow to access and/or to outpour, in particular after a manipulation of opening device 3, the pourable product packaged within the respective package 2, in particular within the respective main body 4. In particular, the manipulation of opening device 3 can be reversible or irreversible.

Preferentially, each opening device 3 may be molded in a single piece.

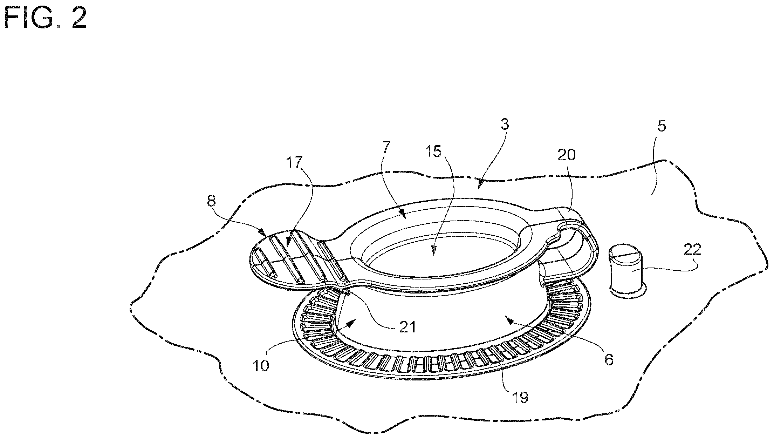

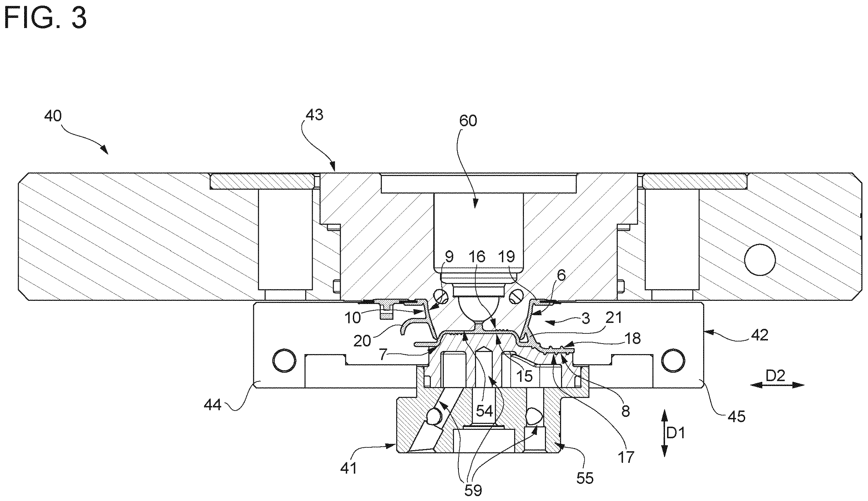

With particular reference to Figures 2 and 3, each opening device 3 may comprise:
- a collar 6 having a pouring outlet;
- a lid 7 covering the pouring outlet; and
- a gripping element 8 connected to and protruding from lid 7.

In particular, collar 6, lid 7 and gripping element 8 may be integral to one another, i.e. collar 6, lid 7 and gripping element 8 may be made as a single piece.

More specifically, each collar 6 may also comprise a respective inlet opening and may delimit a respective flow channel extending between the respective pouring outlet and the respective inlet opening. While the respective pouring outlet allows for the pourable product to flow out of the flow channel, the inlet opening allows the pourable product to enter from the respective main body 4 into the respective flow channel.

Each collar 6 may comprise an inner surface 9 delimiting and/or facing the respective flow channel and an outer surface 10 opposite to inner surface 9.

Preferentially, each lid 7 may be rupturably connected to collar 6, in particular at a rim of collar 6 delimiting the respective pouring outlet.

In this manner one guarantees that the respective pourable product of each package 2 is separated from an outer (hostile) environment. Moreover, it is possible to remove lid 7 from collar 6 so as to free the respective pouring outlet and so as to allow for an outpouring of the pourable product through the respective pouring outlet.

In more detail, each lid 7 is controllable in a closing position in which lid 7 covers the respective pouring outlet and an opening position in which lid 7 frees the respective pouring outlet.

While prior to a first control of each lid 7 in the respective opening position lid 7 seals the respective pouring outlet, it is still possible to newly place lid 7 in the respective closing position, without obtaining a sealing of the respective pouring outlet, indeed, lid 7 only closes the pouring outlet.

It should be noted that each lid 7 is delivered to the consumer being in the closing position and being rupturably connected to the respective collar 6.

With particular reference to Figures 2 and 3, each lid 7 may comprise a respective first lid face 15 and a second lid face 16 opposed to first lid face 15. In particular, first lid face 15 may face an outer environment and/or second lid face 16 may face the respective flow channel, in particular with lid 7 being in the closing position.

In more detail, each gripping element 8 is configured to be gripped by a user, in particular for moving lid 7, even more particular for moving lid 7 from the respective closing position to the respective opening position and/or from the respective opening position to the respective closing position.

Preferentially, each gripping element 8 may comprises a first gripping face 17 and a second gripping face 18 opposed to first gripping face 17. In particular, in use, a user grips gripping element 8 such that one finger is in contact with first gripping face 18 and another finger is in contact with second gripping face 19.

According to some preferred non-limiting embodiments, each gripping element 8 may radially protrude from the respective lid 7.

Each gripping element 8 may also comprise a plurality of ripples, in particular the ripples improve the grip of gripping element 8.

In further detail and reverting back to Figures 2 and 3, each opening device 3 may also comprise a base frame 19 configured to couple opening device 3 to the respective main body 4, in particular about a designated pour opening of main body 4.

In particular, each collar 6 may be integrally connected to and may extend from the respective base frame 19.

Preferentially, each opening device 3 may also comprise a tethering element 20 integrally connected to collar 6 and/or base frame 19, in the specific example shown to collar 6, and to lid 7. In particular, each tethering element 20 tethers the respective lid 7 to the respective collar 6 and/or base frame 19.

Moreover, each opening device 3 may also comprise a tamper-evidence element 21 connected to lid 7 and collar 6. Upon the first-time control of lid 7 in the opening position, tamper-evidence element 21 may rupture.

According to some preferred non-limiting embodiments, each opening device 3 may also comprise a retaining element 22 configured to interact with tethering element 20 and such to retain the respective lid 7 in the respective opening position. Preferentially, retaining element 22 may protrude from the respective base frame 19.

Preferentially, the packaging material may be multilayer packaging material. In other words, the packaging material may have a multilayer structure (not shown).

In more detail, the packaging material may comprise at least a layer of fibrous material, such as e.g. a paper or cardboard layer, and at least two layers of heat-seal plastic material, e.g. polyethylene, interposing the layer of fibrous material in between one another. One of these two layers of heat-seal plastic material defines an inner face of package 2, in particular the respective main body 4, eventually contacting the pourable product.

Preferably but not necessarily, the packaging material may also comprise a layer of gas- and light-barrier material, e.g. aluminum foil or ethylene vinyl alcohol (EVOH) film, in particular being arranged between one of the layers of the heat-seal plastic material and the layer of fibrous material. Preferentially but not necessarily, the packaging material may also comprise a further layer of heat-seal plastic material being interposed between the layer of gas- and light-barrier material and the layer of fibrous material.

According to a preferred non-limiting embodiment, the packaging material may comprise a first face and a second face, in particular the first face being the face of the packaging material forming the inner face of the formed package 2, in particular the formed main body 4, eventually contacting the filled pourable food product.

According to the example shown, the packaging material is provided in the form of web 5. Preferentially, web 5 comprises a plurality of repeat units, in particular successively arranged (and equally spaced) with respect to one another along web 5. In particular, each repeat unit forms the basis of one respective package 2. In other words, packaging machine 1 may be configured to produce packages 2 from web 4 such that each package 2 results from one respective repeat unit.

Additionally, packaging machine 1 may be configured to apply, in particular mold, at least one respective opening device 3 onto each repeat unit.

In particular, each repeat unit may be defined by one respective pattern present on web 5. Even more particular, the pattern may be substantially identical for all repeat units and may differ in minor details from the other ones - minor differences may e.g. be the presence of information tags indicating a production day, a production lot, personalized information or similar.

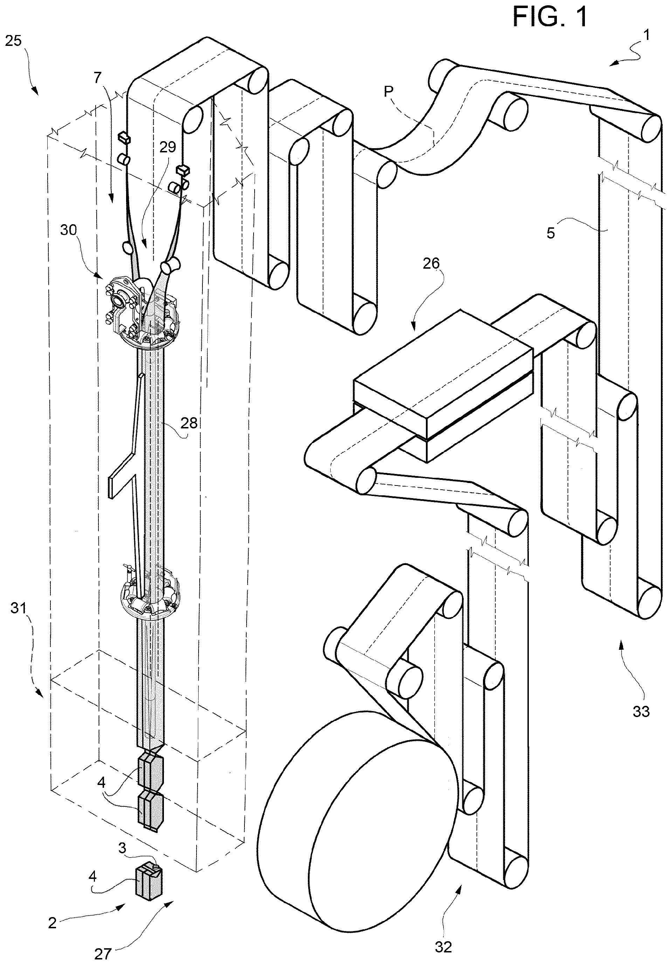

With particular reference to Figure 1, packaging machine 1 comprises at least a package forming apparatus 25 for forming packages 2 from the packaging material, in particular from web 5.

Moreover, packaging machine 1 may also comprise a molding system 26 for molding opening devices 3 onto the packaging material, in particular web 5.

Preferentially, package forming apparatus 25 may comprise at least:
- a conveying device 27 configured to advance web 5 along a web advancement path P at least to a tube forming station at which web 5 is formed into a tube 28; and
- a tube forming and sealing device 29 configured to form tube 28 from web 5 and to longitudinally seal tube 28 at the tube forming station;
- a filling device 30 configured to fill tube 28 with the pourable product; and
- a package forming unit 31 configured to at least form and transversally seal and cut tube 28 for obtaining packages 2.

According to a preferred non-limiting embodiment, packaging machine 1 may further comprise a sterilization apparatus for sterilizing web 5. In particular, the sterilization apparatus may be configured to sterilize web 5 by means of physical and/or chemical sterilization.

According to some preferred non-limiting embodiments, molding system 26 may be arranged upstream of tube forming and sealing device 29, in particular of tube forming and sealing device 29 and the sterilization apparatus, along web advancement path P.

According to some preferred non-limiting embodiments, packaging machine 1 may also comprise a first web buffer unit 32 and/or a second web buffer unit 33, in particular first web buffer unit 32 and/or second web buffer unit 33 being of the variable type (i.e. the buffer capacity of the respective web buffer unit can be (dynamically) varied).

Preferentially, first web buffer unit 32 may be arranged upstream of molding system 26 along web advancement path P.

Preferentially, second web buffer unit 33 may be arranged downstream of molding system 26 along web advancement path P.

According to some preferred non-limiting embodiments, conveying device 27 may be configured to advance web 5 within molding system 26 intermittently. In this way, it is possible to mold a plurality opening devices 3 onto web 5 while stopping advancement of web 5 within molding system 26 and to advance a portion of web 5 carrying the molded opening device 3 out of molding system 26.

In order to guarantee a continuous production of packages 2 (i.e. without interruption or in other words in a non-intermittent manner) first web buffer unit 32 and second web buffer 33 may be operated such that advancement of web 5 downstream of molding system 26, in particular of molding system 26 and second web buffer 33 is continuous.

Molding system 26 may comprise one or more molding apparatuses, each one configured to mold one or more opening devices 3 (at a time) onto web 5, in particular onto at least one respective repeat unit. According to some possible embodiments, each molding apparatus may be configured to mold one respective opening device 3 (at a time).

Preferentially, molding system 26 may comprise a conveyor unit (in particular, being a portion of conveying device 27) configured to intermittently advance and stop web 5, and in particular each molding apparatus may be configured to mold onto web 5 the respective opening device(s) 3 during a stop of web 5.

Preferentially, the molding apparatuses may be arranged successively to one another, and in particular equally spaced from one another.

By having a plurality of molding apparatuses and/or by each molding apparatus being configured to mold each time a plurality of opening devices 3 it is possible to guarantee a continuous production of packages 2.

According to some preferred non-limiting embodiments, web 5 may comprise a plurality of holes and, in use, each molding apparatus may be configured to mold opening devices 3 onto web 5 and about the holes. In particular, the holes may define designated pour openings of packages 2, in particular the respective main bodies 4.

According to some non-limiting embodiment, each hole may be a through-hole. Alternatively, each hole could be covered by a covering layer.

In particular, each repeat unit may comprise one respective hole.

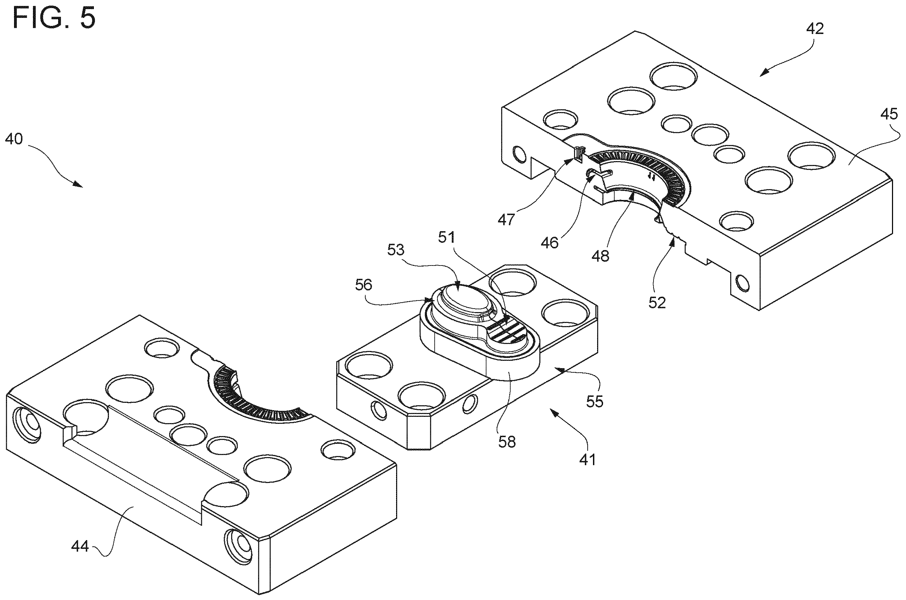

With particular reference to Figures 3 to 5, each molding apparatus may comprise:
- at least one mold tool 40 couplable and/or coupled to the packaging material, in particular web 5, in particular at the respective repeat unit; and
- an injection device configured to inject a molten polymer into the respective molding tool 40.

According to some possible non-limiting embodiments, one or more molding apparatuses may comprise a plurality of molding tool 40, each one configured to receive the molten polymer from the respective injection device.

With particular reference to Figures 3 to 6, each molding tool 40 may comprise a mold cavity (occupied by the respective opening device 3 in Figure 3), the mold cavity defining the respective shape of opening device 3, and in particular of the various portions of opening device 3 such as the respective lid 7, the respective collar 6, the respective gripping element 8, and in particular also base frame 19, tethering element 20, tamper-evidence element 21 and retaining element 22.

In further detail, each molding tool 40 may comprise a plurality of molding tool portions, in particular comprising and/or consisting of a metallic material, and may be controllable in a molding configuration in which the molding tool portions are approached towards one another thereby defining and/or delimiting the respective mold cavity and a demolding configuration in which the molding tool portions are distanced from one another thereby allowing to demold a respective molded opening device 3.

In other words, when molding tool 40 is in the respective molding configuration, the respective mold cavity is formed and is ready to receive the molten polymer and when molding tool 40 is in the respective demolding configuration it is possible to remove the molded opening device 3 from the plurality of molding tool portions.

In even more detail, each molding tool 40 may comprise at least a first molding tool portion 41 and a second molding tool portion 42. Preferentially, first molding tool portion 41 and second molding tool portion 42 may define, in particular in collaboration with one another, a portion of the respective mold cavity, which in turn defines the shape of the respective gripping element 8.

Preferentially, each molding tool 40 may also comprise a third molding tool portion 43.

Preferentially, first molding tool portion 41, second molding tool portion 42 and third molding tool portion 43 may define in collaboration the respective mold cavity, in particular when molding tool 40 is in the molding configuration.

In further detail, first molding tool portion 41, second molding tool portion 42 and third molding tool portion 43 may be configured to modify their relative positions so that molding tool 40 moves between the molding configuration and the demolding configuration.

In particular, first molding tool portion 41, second molding tool portion 42 and third molding tool portion 43 are approached towards one another with the respective molding tool 40 being in the molding configuration and are withdrawn from one another with the respective molding tool 40 being in the demolding configuration.

According to some preferred non-limiting embodiments, each molding apparatus may comprise one or more moving devices for controlling the relative positions of first molding tool portion 41, second molding tool portion 42 and third molding tool portion 43.

According to the specific embodiment shown, second molding portion 42 may comprise a first section 44 and a second section 45 being configured to be subjected to a relative movement for approaching and withdrawing first section 44 and second section 45 from one another, in particular so as to allow control of the respective molding tool 40 between the molding configuration and the demolding configuration.

In particular, when the respective molding tool 40 is in the molding configuration and the demolding configuration, first section 44 and second section 45 are, respectively, approached to and withdrawn from one another.

Preferentially, the one or more moving devices may be configured to control the relative position of first section 44 and second section 45.

With particular reference to Figure 3, each first molding tool portion 41 and the respective third molding tool portion 43 may be configured such that the portion of the respective mold cavity defined by, in particular defined by collaboration of, first molding tool portion 41 and the respective third molding tool portion 43 may define the shape of the respective lid 7; and/or
each second molding tool portion 42 may define together, in particular may define in collaboration with, third molding tool portion 43 a further portion of the mold cavity, the further portion may define at least partially the shape of the respective collar 6.

In more detail, each third molding tool portion 43 may define together with the respective first section 44 and the respective second section 45 the further portion of the mold cavity for defining the shape of the respective collar 6.

According to some further embodiments, each second molding tool portion 42, in particular the respective first section 44 and the respective second section 45, may define together with third molding tool portion 43 a respective portion of the mold cavity, which in turn defines the shape of the respective base frame 19 of the to be molded opening device 3.

Moreover, each third molding tool portion 43 and second molding tool portion 42, in particular the respective first section 44 and the respective second section 45 are configured to interpose, in use, the packaging material between one another, in particular when the respective molding tool 40 is controlled in the respective molding configuration.

According to some preferred non-limiting embodiments, each second molding tool portion 42 may comprise:
- a respective first cavity 46 configured to define a respective first zone of the respective mold cavity, which in turn defines the shape of the respective tethering element 20 of the to be molded opening device 3; and/or
- a respective second cavity (being occupied by the molded tamper-evidence element 21 in Figure 3) configured to define a respective second zone of the respective mold cavity, which in turn defines the shape of the respective tamper-evidence element 21 of the to be molded opening device 3; and/or
- a respective third cavity 47 configured to define a respective third zone of the respective mold cavity, which in turn defines the shape of the respective retaining element 22 of the to be molded opening device 3; and/or
- a respective fourth cavity 48 configured to define a respective fourth zone of the respective mold cavity, which in turn defines the shape of a respective rim of the to be molded opening device 3, the rim delimits the respective pouring outlet.

More specifically, each first section 44 and the respective second section 45 may each comprise a respective portion of the respective first cavity 46 and/or of the respective second cavity and/or of the respective third cavity 47 and/or of the respective fourth cavity 48.

With particular reference to Figures 3 to 6, each first molding tool portion 41 and the respective second molding tool portion 42 may be configured such that first molding tool portion 41 is, after molding of the opening device 3, in contact with the respective first gripping face 17 and second molding tool portion 42 is, after molding of the respective opening device 3, in contact with the respective second gripping face 18.

In more detail, each first molding tool portion 41 may comprise a first delimiting surface 51 and the respective second molding tool 42 may comprise a second delimiting surface 52 being spaced apart from the respective first delimiting surface 51 with the respective molding tool 40 being in the respective molding configuration and thereby defining the respective portion of the respective mold cavity that defines the respective gripping element 8 of the respective opening device 3. Moreover, each first delimiting surface 51 is, after molding of the respective opening device 3, in contact with the respective first gripping face 17 and the respective second delimiting surface 52 is, after molding of the respective opening device 3, in contact with the respective second gripping face 18.

In particular, each gripping element 8 may after molding of the respective opening device 3 be interposed between the respective first delimiting surface 51 and the respective second delimiting surface 52.

Additionally, a surface structure of each gripping element 8, in particular of the respective first gripping face 17 and the respective second gripping face 18, may be defined by a surface structure of respectively the respective first delimiting surface 51 and the respective second delimiting surface 52.

The Applicant has observed that by delimiting the portion of the mold cavity that defines the gripping element 8 by means of first molding tool portion 41 and second molding tool portion 42, one obtains a facilitated demolding of opening device 3, in particular of the respective gripping element 8. In particular, the demolding of gripping element 8 is easier when e.g. compared to the case of a gripping element 8 formed in a portion of a mold cavity that is formed as a single cavity within a molding tool portion.

The Applicant has observed that this is in particular advantageous when gripping elements 8 may comprise ripples for improving the gripping of gripping elements 8.

According to some possible non-limiting embodiments, each first molding tool portion 41 and the respective third molding tool portion 43 may be configured such that first molding tool portion 41 is, after molding of the respective opening device 3, in contact with first lid face 15 and third molding tool portion 43 is, after molding of the respective opening device 3, in contact with second lid face 16.

In more detail, each first molding tool portion 41 may comprise a third delimiting surface 53 and the respective second molding tool portion 42 may comprise a fourth delimiting surface 54 being spaced apart from the respective third delimiting surface 53 with the respective molding tool 40 being in the respective molding configuration and thereby defining the respective portion of the respective mold cavity that defines the respective lid 7 of the respective opening device 3. Moreover, each third delimiting surface 53 is, after molding of the respective opening device 3, in contact with the respective first lid face 15 and the respective fourth delimiting surface 54 is, after molding of the respective opening device 3, in contact with the respective second lid face 16.

Preferentially, first delimiting surface 51 and third delimiting surface 53 may be connected to one another.

According to some preferred non-limiting embodiments, each first molding tool portion 41 and the respective second molding tool portion 42 may be configured such that during control of the molding 40 tool between the molding configuration and the demolding configuration, first molding tool portion 41 and the respective second molding tool portion 42 execute a relative movement along a first direction D1 transversal, in particular perpendicular, to the respective first gripping face 17 and/or the respective second gripping face 18 and/or the first delimiting surface 51 and/or the second delimiting surface 52.

In other words, the relative movement along first direction D1 may result from moving first molding tool portion 41 along first direction D1 only, moving second molding tool portion 42 along first direction D1 only or moving first molding tool portion 41 and second molding tool portion 42 along first direction D1 in opposite senses.

Preferentially, each first molding tool portion 41 and the respective third molding tool portion 43 may be configured such that during control of the molding tool 40 between the molding configuration and the demolding configuration, first molding tool portion 41 and the respective third molding tool portion 43 execute a relative movement along a direction parallel to first direction D1.

According to some preferred non-limiting embodiments, each first section 44 and the respective second section 45 may be configured such that during control of the molding tool 40 between the molding configuration and the demolding configuration, first section 44 and second section 45 may execute a relative movement along a second direction D2, transversal, in particular perpendicular, to first direction D1.

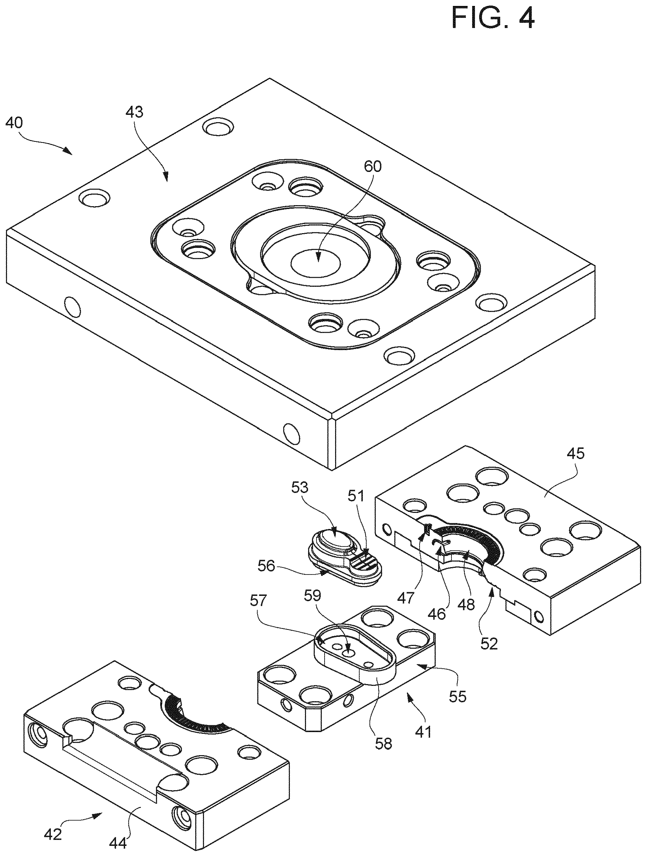

With particular reference to Figures 4, 5 and 6, the first molding tool portion 41 comprises a base 55 and a forming element 56, the forming element 56 at least partially defining the shape of gripping element 8 and lid 7.

In particular, each forming element 56 may be in contact with the respective first gripping face 17 and/or the first lid face 15 after molding of the respective opening device 3.

In more detail, in particular, each forming element 56 may be configured to define together with the respective second molding tool portion 42 the portion of the respective mold cavity that defines the shape of the respective gripping element 8 and/or to define together with the respective third molding tool portion 43 the portion of the respective mold cavity that defines the shape of the respective lid 7.

More specifically, forming element 56 may comprise the respective first delimiting surface 51 and/or the respective third delimiting surface 53.

According to the invention, the base 55 has a housing seat 57 and the respective forming element 56 is placed within housing seat 57. Preferentially, forming element 56 may be fixed within housing seat 57, e.g. by means of fixing elements such as screws, pins or the like and/or by means of friction.

In even further detail, an end portion of each forming element 56 is placed within the respective housing seat 57. In particular, the end portion is complementary to the respective housing seat 57.

Moreover, each housing seat 57 may comprise and/or may be delimited by a wall 58, in particular an annular wall 58.

According to some preferred non-limiting embodiments, each base 55 may comprise a first metallic material and the respective forming element 56 may comprise a second metallic material distinct and different from the first metallic material.

In this way, it is possible to improve and/or tune the thermal conductivity of first molding tool portion 41, in particular forming element 56.

Preferentially, the second metallic material may have a larger thermal conductivity than the first metallic material.

Preferentially, the first metallic material may comprise and/or may be stainless steel.

According to some preferred non-limiting embodiments, the second metallic material may comprise aluminum and/or an aluminum alloy and/or may be an aluminum alloy.

Alternatively or in addition, the second metallic material may comprise copper and/or a copper alloy and/or may be a copper alloy.

Preferentially, the second metallic material may comprise chromium and/or titanium and/or iron and/or magnesium and/or silicon and/or zinc and/or manganese. In particular, if the second metallic material comprises iron and/or silicon these may be impurities.

An example of the second metallic material may be Alumec^{®} 89, Alumec^{®} 79, Alumec^{®} 99 or the like. Alternatively, the second metallic material may be Formaplast^{®} 160, Formaplast^{®} 200, Formaplast^{®} 240 or the like.

According to some preferred non-limiting embodiments, the second metallic material may comprise at least 90% in weight of aluminum or copper.

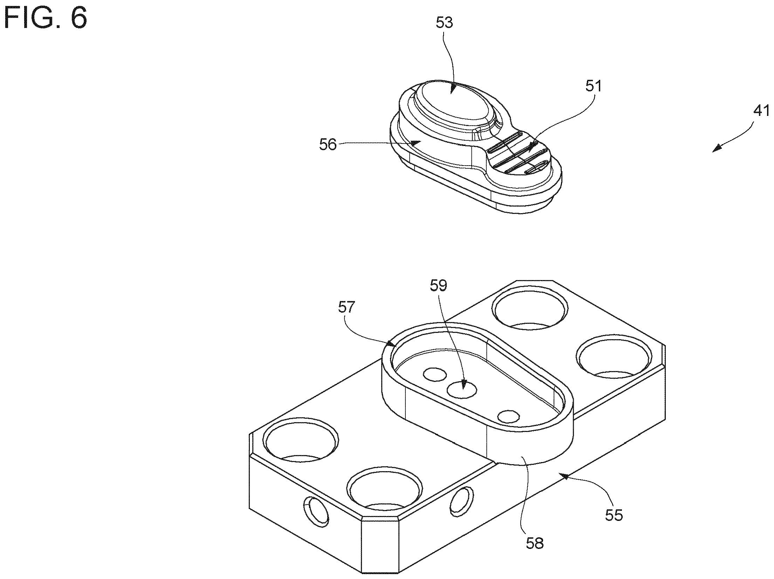

With particular reference to Figures 3 and 6, each molding tool 40 may comprise a plurality of cooling channels 59 configured to receive a cooling fluid for cooling molding tool 40.

In particular, each first molding tool portion 41, in particular the respective base 55 and the respective forming element 56, may comprise one or more cooling channels 59.

Additionally, each second molding tool portion 42 and/or each third molding tool portion 43 may comprise respective cooling channels 59.

Preferentially, the cooling channels 59 may be in fluidic connection with a cooling fluid distribution device of the respective molding apparatus and/or of the respective molding system 26.

With particular reference to Figure 3, each molding tool 40 may also comprise at least one injection channel 60 being in fluidic connection with the respective mold cavity with molding tool 40 being in the molding configuration, injection channel 60 being configured to allow for the introduction of the molten polymer into the respective mold cavity.

According to the specific embodiment shown, each third molding tool portion 43 may comprise the injection channel 60.

Preferentially, each injection channel 60 may be in fluidic connection with the respective injection device.

In use, packaging machine 1 allows for the formation of packages 2, each having respective opening devices 3.

Opening device 3 are molded by operation of molding system 26, in particular the one or more molding apparatuses.

Preferentially, opening devices 3 are molded directly onto the packaging material, in particular web 5, even more preferentially prior to forming the packaging material.

Operation of each molding apparatus foresees to control each molding tool 40 from the demolding configuration to the molding configuration, in particular thereby clamping the packaging material, in particular web 5, between the respective second molding tool portion 42 and the respective third molding tool portion 43.

Then, the respective injection device injects, in particular through the respective injection channel 60, the molten polymer into the respective mold cavity.

Afterwards, one controls the respective molding tool 40 back to the demolding configuration so allowing to demold the respective molded opening device 3 from molding tool 40.

In more detail, in order to control molding tool 40 from the demolding configuration to the molding configuration and from the molding configuration to the demolding configuration, one or more respective moving devices change the relative positions of the respective first molding tool portion 41, the respective second molding tool portion 42 and the respective third molding tool portion 43. Additionally, the relative positions of the respective first section 44 and the respective second section 45 may be modified.

In particular, modification of the relative position of each first molding tool portion 41 and the respective second molding tool portion 42 requires controlling a relative movement of first molding tool portion 41 and the respective second molding tool portion 42 along first direction D1. Controlling molding tool 40 from the demolding configuration to the molding configuration requires approaching first molding tool portion 41 and the respective second molding tool portion 42 towards one another and controlling molding tool 40 from the molding configuration to the demolding configuration requires withdrawing first molding tool portion 41 and the respective second molding tool portion 42 from one another.

In particular, modification of the relative position of each first molding tool portion 41 and the respective third molding tool portion 43 requires controlling a relative movement of first molding tool portion 41 and the respective third molding tool portion 43 along the direction parallel to first direction D1. Controlling molding tool 40 from the demolding configuration to the molding configuration requires approaching first molding tool portion 41 and the respective third molding tool portion 43 towards one another and controlling molding tool 40 from the molding configuration to the demolding configuration requires withdrawing first molding tool portion 41 and the respective third molding tool portion 43 from one another.

Preferentially, also a relative position of each third molding tool portion 43 and the respective second molding tool portion 42 may be actuated. The relative position of each third molding tool portion 43 and the respective second molding tool portion 42 may be modified along a direction parallel to first direction D1. In more detail, control in the molding configuration requires to approach third molding tool portion 43 and the respective second molding tool portion 42 towards one another and control in the demolding configuration requires to withdraw third molding tool portion 43 and the respective second molding tool portion 42 from one another.

Advantageously, when controlling molding tool 40 form the demolding configuration to the molding configuration or from the molding configuration to the demolding configuration a relative position of the respective first section 44 and the respective second section 45 may be controlled too.

In particular, when controlling molding tool 40 in the respective molding configuration, the respective first section 44 and the respective second section 45 may be approached towards one another and when controlling molding tool 40 in the respective demolding configuration, the respective first section 44 and the respective second section 45 may be withdrawn from one another.

The advantages of molding tool 40 and/or the molding apparatus and/or molding system 26 and/or packaging machine 1 according to the present invention will be clear from the foregoing description.

In particular, molding tool 40 allows for a facilitated demolding of opening devices 3.

Clearly, changes may be made to molding tool 40 and/or the molding apparatus and/or molding system 26 and/or packaging machine 1 as described herein without, however, departing from the scope of protection as defined in the accompanying claims.

## Claims

1. Molding tool (40) for molding an opening device (3) comprising a collar (6) having a pouring outlet, a lid (7) covering the pouring outlet and a gripping element (8) connected to and protruding from the lid (7);
the molding tool (40) comprises a plurality of molding tool portions (41, 42, 43) and is controllable in a molding configuration in which the molding tool portions (41, 42, 43) are approached towards one another thereby defining a mold cavity and a demolding configuration in which the molding tool portions (41, 42, 43) are distanced from one another thereby allowing to demold a molded opening device (3);
wherein at least a first molding tool portion (41) and at least a second molding tool portion (42) define a portion of the mold cavity that defines a shape of the gripping element (8) of the opening device (3) to be molded;
wherein the first molding tool portion (41) and the second molding tool portion (42) are configured such that the first molding tool portion (41) is, after molding of the opening device (3), in contact with a first gripping surface (17) of the gripping element (8) and the second molding tool portion (42) is, after molding of the opening device (3), in contact with a second gripping face (18) of the gripping element (8), the second gripping face (18) being opposed to the first gripping face (17),
wherein the first molding tool portion (41) comprises a base (55) having a housing seat (57) and a forming element (56) placed within the housing seat (57);
wherein the forming element (56) partially defines the shape of the gripping element (8) and the lid (7) of the opening device (3) to be molded.

2. Molding tool according to claim 1, wherein the first molding tool portion (41) comprises a first delimiting surface (51) and the second molding tool portion (42) comprises a second delimiting surface (52) being spaced apart from the first delimiting surface (51) with the molding tool (40) being controlled in the molding configuration and thereby defining the portion of the mold cavity that defines the respective gripping element (8) of the opening device (3) to be molded;
wherein the first delimiting surface (51) is, after molding of the opening device (3), in contact with the first gripping face (17) and the second delimiting surface (52) is, after molding of the opening device (3), in contact with the respective second gripping face (18).

3. Molding tool according to claim 1 or 2, wherein the first molding tool portion (41) and the second molding tool portion (42) are configured such that during control of the molding tool (40) between the molding configuration and the demolding configuration, the first molding tool portion (41) and the respective second molding tool portion (42) execute a relative movement along a first direction (D1) transversal to the respective first gripping face (17) and/or the respective second gripping face (18).

4. Molding tool according to any one of the preceding claims, and further comprising a third molding tool portion (43);
wherein the first molding tool portion (41) and the third molding tool portion (43) are configured such that the portion of the mold cavity defined by the first molding tool portion (41) and the third molding tool portion (43) defines a shape of the lid (7);
wherein the first molding tool portion (41) and the third molding tool portion (43) are configured such that the first molding tool portion (41) is, after molding of the opening device (3), in contact with a first lid face (15) of the lid (7) and the third molding tool portion (43) is, after molding of the opening device (3), in contact with a second lid face (16) of the lid, the second lid face (16) being opposed to the first lid face (15).

5. Molding tool according to any one of the preceding claims, wherein the second molding tool portion (42) defines together with a third molding tool portion (43) a further portion of the mold cavity, the further portion defines at least partially a shape of the collar (6) of the opening device (3) to be molded.

6. Molding tool according to claim 5, wherein the first molding tool portion (41) and the second molding tool portion (42) are configured such that a relative movement of the first molding tool portion (41) and of the second molding tool portion (42) along a first direction (D1) allows approaching and withdrawing the first molding tool portion (41) and the second molding tool portion (42) to and from one another;
wherein the molding tool (40) comprises a third molding tool portion (43);
the third molding tool portion (43) is configured such that a relative movement of the third molding tool portion (43) with respect to the first molding tool portion (41) along a second direction parallel to the first direction (D1) allows approaching and withdrawing the third molding tool portion (43) to and from the first molding tool portion (41).

7. Molding tool according to any of the previous claims, wherein the base (55) comprises stainless steel and the forming element (56) comprises aluminum and/or copper.

8. Molding tool according to any one of the preceding claims, wherein the one or more molding tool portions (41, 42, 43) comprises a plurality of cooling channels (59).

9. Molding tool according to any one of the preceding claims, wherein the molding tool portions (41, 42, 43) comprise and/or consist of a metal.

10. Molding tool according to any one of the preceding claims configured to mold the opening device (3) onto a multilayer packaging material.

11. Molding apparatus for molding an opening device (3) comprising:
- at least one molding tool (40) according to any one of the preceding claims; and
- an injection device configured to inject a molten polymer into the mold cavity of the at least one molding tool (40) when the at least one molding tool (40) is in the molding configuration.

12. Molding apparatus according to claim 11, wherein the molding apparatus is configured to mold the opening device (3) onto a packaging material;
wherein the molding tool (40) is configured to be coupled to the packaging material when being in the molding configuration.

13. Packaging machine (1) for forming packages (2) having at least one respective opening device (3) and being filled with a pourable product;
the packaging machine (1) comprises at least one molding apparatus according to claim 11 or 12 for molding opening devices (3) onto a packaging material and a package forming apparatus (25) for producing the packages (2) from the packaging material.

## Patentansprüche

1. Formwerkzeug (40) zum Formen einer Öffnungseinrichtung (3), die einen Kragen (6) mit einem Gießauslass, einen Deckel (7), der den Gießauslass abdeckt, und ein Greifelement (8), das mit dem Deckel (7) verbunden ist und von diesem vorsteht, umfasst;
wobei das Formwerkzeug (40) eine Mehrzahl von Formwerkzeugabschnitten (41, 42, 43) umfasst und in eine Formungskonfiguration, in der die Formwerkzeugabschnitte (41, 42, 43) aneinander angenähert sind und dadurch einen Formhohlraum definieren, und eine Entformungskonfiguration, in der die Formwerkzeugabschnitte (41, 42, 43) voneinander entfernt sind und dadurch erlauben, eine geformte Öffnungseinrichtung (3) zu entformen, steuerbar ist;
wobei wenigstens ein erster Formwerkzeugabschnitt (41) und wenigstens ein zweiter Formwerkzeugabschnitt (42) einen Abschnitt des Formhohlraums definieren, der eine Form des Greifelements (8) der zu formenden Öffnungseinrichtung (3) definiert;
wobei der erste Formwerkzeugabschnitt (41) und der zweite Formwerkzeugabschnitt (42) derart ausgestaltet sind, dass der erste Formwerkzeugabschnitt (41) nach dem Formen der Öffnungseinrichtung (3) mit einer ersten Greiffläche (17) des Greifelements (8) in Kontakt steht und der zweite Formwerkzeugabschnitt (42) nach dem Formen der Öffnungseinrichtung (3) mit einer zweiten Greiffläche (18) des Greifelements (8) in Kontakt steht, wobei die zweite Greiffläche (18) der ersten Greiffläche (17) gegenüberliegt,
wobei der erste Formwerkzeugabschnitt (41) eine Basis (55) mit einer Aufnahme (57) und ein Formgebungselement (56), das innerhalb der Aufnahme (57) angeordnet ist, umfasst;
wobei das Formgebungselement (56) teilweise die Form des Greifelements (8) und des Deckels (7) der zu formenden Öffnungseinrichtung (3) definiert.

2. Formwerkzeug nach Anspruch 1, wobei der erste Formwerkzeugabschnitt (41) eine erste Begrenzungsfläche (51) umfasst und der zweite Formwerkzeugabschnitt (42) eine zweite Begrenzungsfläche (52) umfasst, die von der ersten Begrenzungsfläche (51) beabstandet ist, wenn das Formwerkzeug (40) in die Formungskonfiguration gesteuert ist, und dadurch den Abschnitt des Formhohlraums definiert, der das jeweilige Greifelement (8) der zu formenden Öffnungseinrichtung (3) definiert;
wobei die erste Begrenzungsfläche (51) nach dem Formen der Öffnungseinrichtung (3) mit der ersten Greiffläche (17) in Kontakt steht und die zweite Begrenzungsfläche (52) nach dem Formen der Öffnungseinrichtung (3) mit der jeweiligen zweiten Greiffläche (18) in Kontakt steht.

3. Formwerkzeug nach Anspruch 1 oder 2, wobei der erste Formwerkzeugabschnitt (41) und der zweite Formwerkzeugabschnitt (42) derart ausgestaltet sind, dass während der Steuerung des Formwerkzeugs (40) zwischen der Formungskonfiguration und der Entformungskonfiguration der erste Formwerkzeugabschnitt (41) und der jeweilige zweite Formwerkzeugabschnitt (42) eine Relativbewegung entlang einer ersten Richtung (D1) quer zu der jeweiligen ersten Greiffläche (17) und/oder der jeweiligen zweiten Greiffläche (18) ausführen.

4. Formwerkzeug nach einem der vorangehenden Ansprüche und ferner einen dritten Formwerkzeugabschnitt (43) umfassend;
wobei der erste Formwerkzeugabschnitt (41) und der dritte Formwerkzeugabschnitt (43) derart ausgestaltet sind, dass der Abschnitt des Formhohlraums, der durch den ersten Formwerkzeugabschnitt (41) und den dritten Formwerkzeugabschnitt (43) definiert wird, eine Form des Deckels (7) definiert;
wobei der erste Formwerkzeugabschnitt (41) und der dritte Formwerkzeugabschnitt (43) derart ausgestaltet sind, dass der erste Formwerkzeugabschnitt (41) nach dem Formen der Öffnungseinrichtung (3) mit einer ersten Deckelfläche (15) des Deckels (7) in Kontakt steht und der dritte Formwerkzeugabschnitt (43) nach dem Formen der Öffnungseinrichtung (3) mit einer zweiten Deckelfläche (16) des Deckels in Kontakt steht, wobei die zweite Deckelfläche (16) der ersten Deckelfläche (15) gegenüberliegt.

5. Formwerkzeug nach einem der vorangehenden Ansprüche, wobei der zweite Formwerkzeugabschnitt (42) zusammen mit einem dritten Formwerkzeugabschnitt (43) einen weiteren Abschnitt des Formhohlraums definiert, wobei der weitere Abschnitt wenigstens teilweise eine Form des Kragens (6) der zu formenden Öffnungseinrichtung (3) definiert.

6. Formwerkzeug nach Anspruch 5, wobei der erste Formwerkzeugabschnitt (41) und der zweite Formwerkzeugabschnitt (42) derart ausgestaltet sind, dass eine Relativbewegung des ersten Formwerkzeugabschnitts (41) und des zweiten Formwerkzeugabschnitts (42) entlang einer ersten Richtung (D1) ein Annähern und Zurückziehen des ersten Formwerkzeugabschnitts (41) und des zweiten Formwerkzeugabschnitts (42) an- und voneinander erlaubt; wobei das Formwerkzeug (40) einen dritten Formwerkzeugabschnitt (43) umfasst;
wobei der dritte Formwerkzeugabschnitt (43) derart ausgestaltet ist, dass eine Relativbewegung des dritten Formwerkzeugabschnitts (43) in Bezug auf den ersten Formwerkzeugabschnitt (41) entlang einer zweiten Richtung parallel zu der ersten Richtung (D1) ein Annähern und Zurückziehen des dritten Formwerkzeugabschnitts (43) an und von denim ersten Formwerkzeugabschnitt (41) erlaubt.

7. Formwerkzeug nach einem der vorangehenden Ansprüche, wobei die Basis (55) nichtrostenden Stahl umfasst und das Formgebungselement (56) Aluminium und/oder Kupfer umfasst.

8. Formwerkzeug nach einem der vorangehenden Ansprüche, wobei der eine oder die mehreren Formwerkzeugabschnitt(e) (41, 42, 43) eine Mehrzahl von Kühlkanälen (59) umfasst/umfassen.

9. Formwerkzeug nach einem der vorangehenden Ansprüche, wobei die Formwerkzeugabschnitte (41, 42, 43) ein Metall umfassen und/oder aus einem solchen bestehen.

10. Formwerkzeug nach einem der vorangehenden Ansprüche, das dazu ausgestaltet ist, die Öffnungseinrichtung (3) auf ein mehrschichtiges Verpackungsmaterial aufzuformen.

11. Formvorrichtung zum Formen einer Öffnungseinrichtung (3), umfassend:
- wenigstens ein Formwerkzeug (40) nach einem der vorangehenden Ansprüche; und
- eine Einspritzeinrichtung, die dazu ausgestaltet ist, ein geschmolzenes Polymer in den Formhohlraum des wenigstens einen Formwerkzeugs (40) einzuspritzen, wenn das wenigstens eine Formwerkzeug (40) sich in der Formungskonfiguration befindet.

12. Formvorrichtung nach Anspruch 11, wobei die Formvorrichtung dazu ausgestaltet ist, die Öffnungseinrichtung (3) auf ein Verpackungsmaterial aufzuformen;
wobei das Formwerkzeug (40) dazu ausgestaltet ist, mit dem Verpackungsmaterial gekoppelt zu sein, wenn es sich in der Formungskonfiguration befindet.

13. Verpackungsmaschine (1) zum Ausbilden von Verpackungen (2), die wenigstens eine jeweilige Öffnungseinrichtung (3) aufweisen und mit einem gießbaren Produkt gefüllt sind;
wobei die Verpackungsmaschine (1) wenigstens eine Formvorrichtung nach Anspruch 11 oder 12 zum Aufformen von Öffnungseinrichtungen (3) auf ein Verpackungsmaterial und eine Verpackungsausbildungsvorrichtung (25) zum Herstellen der Verpackungen (2) aus dem Verpackungsmaterial umfasst.

## Revendications

1. Outil de moulage (40) pour mouler un dispositif d'ouverture (3) comprenant un collier (6) ayant une sortie de coulée, un couvercle (7) couvrant la sortie de coulée et un élément de préhension (8) raccordé au, et faisant saillie du, couvercle (7) ;
l'outil de moulage (40) comprend une pluralité de portions d'outil de moulage (41, 42, 43) et peut être commandé dans une configuration de moulage dans laquelle les portions d'outil de moulage (41, 42, 43) sont approchées l'une en direction de l'autre, définissant ainsi une cavité de moule et une configuration de démoulage dans laquelle les portions d'outil de moulage (41, 42, 43) sont éloignées l'une de l'autre, permettant ainsi de démouler un dispositif d'ouverture (3) moulé ;
au moins une première portion d'outil de moulage (41) et au moins une deuxième portion d'outil de moulage (42) définissant une portion de la cavité de moule qui définit une forme de l'élément de préhension (8) du dispositif d'ouverture (3) à mouler ;
la première portion d'outil de moulage (41) et la deuxième portion d'outil de moulage (42) étant configurées de telle sorte que la première portion d'outil de moulage (41) soit, après moulage du dispositif d'ouverture (3), en contact avec une première surface de préhension (17) de l'élément de préhension (8) et que la deuxième portion d'outil de moulage (42) soit, après moulage du dispositif d'ouverture (3), en contact avec une deuxième face de préhension (18) de l'élément de préhension (8), la deuxième face de préhension (18) étant opposée à la première face de préhension (17),
la première portion d'outil de moulage (41) comprenant une base (55) ayant un siège de logement (57) et un élément de façonnage (56) placé à l'intérieur du siège de logement (57) ;
l'élément de façonnage (56) définissant partiellement la forme de l'élément de préhension (8) et du couvercle (7) du dispositif d'ouverture (3) à mouler.

2. Outil de moulage selon la revendication 1, dans lequel la première portion d'outil de moulage (41) comprend une première surface de délimitation (51) et la deuxième portion d'outil de moulage (42) comprend une deuxième surface de délimitation (52) espacée de la première surface de délimitation (51), l'outil de moulage (40) étant commandé dans la configuration de moulage et définissant ainsi la portion de la cavité de moule qui définit l'élément de préhension (8) respectif du dispositif d'ouverture (3) à mouler ;
la première surface de délimitation (51) étant, après moulage du dispositif d'ouverture (3), en contact avec la première face de préhension (17) et la deuxième surface de délimitation (52) étant, après moulage du dispositif d'ouverture (3), en contact avec la deuxième face de préhension (18) respective.

3. Outil de moulage selon la revendication 1 ou la revendication 2, dans lequel la première portion d'outil de moulage (41) et la deuxième portion d'outil de moulage (42) sont configurées de telle sorte que pendant la commande de l'outil de moulage (40) entre la configuration de moulage et la configuration de démoulage, la première portion d'outil de moulage (41) et la deuxième portion d'outil de moulage (42) respective exécutent un déplacement relatif le long d'une première direction (Dl) transversale à la première face de préhension (17) respective et/ou la deuxième face de préhension (18) respective.

4. Outil de moulage selon l'une quelconque des revendications précédentes, et comprenant en outre une troisième portion d'outil de moulage (43) ;
la première portion d'outil de moulage (41) et la troisième portion d'outil de moulage (43) étant configurées de telle sorte que la portion de la cavité de moule définie par la première portion d'outil de moulage (41) et la troisième portion d'outil de moulage (43) définisse une forme du couvercle (7) ;
la première portion d'outil de moulage (41) et la troisième portion d'outil de moulage (43) étant configurées de telle sorte que la première portion d'outil de moulage (41) soit, après moulage du dispositif d'ouverture (3), en contact avec une première face de couvercle (15) du couvercle (7) et que la troisième portion d'outil de moulage (43) soit, après moulage du dispositif d'ouverture (3), en contact avec une deuxième face de couvercle (16) du couvercle, la deuxième face de couvercle (16) étant opposée à la première face de couvercle (15).

5. Outil de moulage selon l'une quelconque des revendications précédentes, dans lequel la deuxième portion d'outil de moulage (42) définit, conjointement avec une troisième portion d'outil de moulage (43), une portion supplémentaire de la cavité de moule, la portion supplémentaire définit au moins partiellement une forme du collier (6) du dispositif d'ouverture (3) à mouler.

6. Outil de moulage selon la revendication 5, dans lequel la première portion d'outil de moulage (41) et la deuxième portion d'outil de moulage (42) sont configurées de telle sorte qu'un déplacement relatif de la première portion d'outil de moulage (41) et de la deuxième portion d'outil de moulage (42) le long d'une première direction (Dl) permette d'approcher, et de retirer, la première portion d'outil de moulage (41) et la deuxième portion d'outil de moulage (42) l'une vers l'autre et l'une de l'autre ;
l'outil de moulage (40) comprenant une troisième portion d'outil de moulage (43) ;
la troisième portion d'outil de moulage (43) étant configurée de telle sorte qu'un déplacement relatif de la troisième portion d'outil de moulage (43) par rapport à la première portion d'outil de moulage (41) le long d'une deuxième direction parallèle à la première direction (Dl) permette d'approcher, et de retirer, la troisième portion d'outil de moulage (43) vers, et de, la première portion d'outil de moulage (41) .

7. Outil de moulage selon l'une quelconque des revendications précédentes, dans lequel la base (55) comprend de l'acier inoxydable et l'élément de façonnage (56) comprend de l'aluminium et/ou du cuivre.

8. Outil de moulage selon l'une quelconque des revendications précédentes, dans lequel les une ou plusieurs portions d'outil de moulage (41, 42, 43) comprennent une pluralité de canaux de refroidissement (59) .

9. Outil de moulage selon l'une quelconque des revendications précédentes, dans lequel les portions d'outil de moulage (41, 42, 43) comprennent et/ou consistent en un métal.

10. Outil de moulage selon l'une quelconque des revendications précédentes configuré pour mouler le dispositif d'ouverture (3) sur un matériau d'emballage multicouche.

11. Appareil de moulage pour mouler un dispositif d'ouverture (3) comprenant :
- au moins un outil de moulage (40) selon l'une quelconque des revendications précédentes ; et
- un dispositif d'injection configuré pour injecter un polymère fondu dans la cavité de moule de l'au moins un outil de moulage (40) lorsque l'au moins un outil de moulage (40) est dans la configuration de moulage.

12. Appareil de moulage selon la revendication 11, dans lequel l'appareil de moulage est configuré pour mouler le dispositif d'ouverture (3) sur un matériau d'emballage multicouche ;
l'outil de moulage (40) étant configuré pour être couplé au matériau d'emballage lorsqu'il est dans la configuration de moulage.

13. Machine d'emballage (1) pour former des emballages (2) ayant chacun au moins un dispositif d'ouverture (3) respectif et étant remplis d'un produit pouvant être coulé ;
la machine d'emballage (1) comprend au moins un appareil de moulage selon la revendication 11 ou la revendication 12 pour mouler des dispositifs d'ouverture (3) sur un matériau d'emballage et un appareil de façonnage d'emballage (25) pour produire les emballages (2) à partir du matériau d'emballage.
